(19) Europäisches Patentamt / European Patent Office / Office européen des brevets

(11) **EP 2 257 041 A1**

(12) **EUROPEAN PATENT APPLICATION**

(43) Date of publication:
01.12.2010 Bulletin 2010/48

(51) Int Cl.:
*H04N 5/14* (2006.01)          *H04N 5/445* (2006.01)
*G06F 17/30* (2006.01)          *G06K 9/00* (2006.01)

(21) Application number: 09174315.3

(22) Date of filing: 28.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 29.05.2009 JP 2009130592

(71) Applicant: **Kabushiki Kaisha Toshiba**
**Tokyo 105-8001 (JP)**

(72) Inventor: **Takao, Yuji**
**Tokyo 105-8001 (JP)**

(74) Representative: **Henkel, Feiler & Hänzel**
**Patentanwälte**
**Maximiliansplatz 21**
**80333 München (DE)**

(54) **Detection method of television shopping program, and video apparatus using method**

(57)     A television shopping program inserted anywhere in a broadcast program main title is detected. Start and end positions of a section sandwiched between two video frames including a predetermined video or audio feature are detected (ST100). Whether or not the duration of the section, the start and end positions of which are detected, is a predetermined duration is detected (ST104). When it is detected that the duration of the section is the predetermined duration, a character video indicating a price of a commercial item and/or a character video indicating a contact address used to purchase that item is detected from a video of the section (ST106). The continuous display time duration of the character video is detected (ST110). When the continuous display time duration of the character video is a predetermined one, the detected start and end positions are determined as a section of a specific type video (ST114).

FIG. 4

**Description**

The invention relates to a detection method of a television shopping program, and a video apparatus using this method.

In commercial television broadcasting, commercial messages (CMs) are inserted at arbitrary positions before or after or in the middle of a main title of a broadcast program to have a short section (for example, within 60 seconds in increments of multiples of 15 seconds). In addition, a television shopping program is often inserted to have a section (1 to several minutes) longer than a CM. No related art about detection of such television shopping program is found, but there is a related art (Jpn. Pat. Appln. KOKAI Publication No. 2004-336507) about CM detection.

The invention of Jpn. Pat. Appln. KOKAI Publication No. 2004-336507 detects a CM based on features such as "nearly all CMs are created to have durations of 15 seconds, 30 seconds, and 60 seconds", "an audio level inevitably lowers before and after each CM", and "a video signal is switched" (paragraphs 0091 to 0111 of that publication). However, with this method, it is not guaranteed to detect a television shopping program which is created based on a purpose different from a CM and has a duration of 1 minute or more as a program window.

Advantages of the invention will be set forth in the description which follows, and in part will be obvious from the description, or may be learned by practice of the invention. Advantages of the invention may be realized and obtained by means of the instrumentalities and combinations particularly pointed out hereinafter.

One object of the invention is to detect a television shopping program inserted anywhere in a main title of a broadcast program.

With a detection method of a television shopping program according to one embodiment of the invention, a start position (start time) and end position (end time) of a section sandwiched between two video frames which include a predetermined video feature and/or audio feature are detected (ST100), and whether or not a duration of the section, the start position (start time) and end position (end time) of which are detected, is a predetermined duration is detected (ST104). When it is detected that the duration of the section is the predetermined duration, a character video indicating a price of a commercial item and/or a character video indicating a contact address used to purchase that commercial item is detected from a video of this section (ST106), and a continuous display time duration of the character videos (item price, contact telephone number, etc.) is detected (ST110). When it is detected that the continuous display time duration of the character videos is equal to or longer than a predetermined character display time period, it is determined that the detected start position (start time) and end position (end time) define a section of a video of a specific type (a video of a television shopping program inserted in a normal program) (ST114).

According to the invention, a television shopping program inserted anywhere in a main title of a broadcast program can be detected.

The invention can be more fully understood from the following detailed description when taken in conjunction with the accompanying drawings, in which:

FIG. 1 is an exemplary block diagram for explaining the arrangement of a video apparatus according to an embodiment of the invention;
FIG. 2 is an exemplary view for explaining the start position (start time) and end position (end time) of a section sandwiched between two video frames including predetermined features;
FIG. 3 is an exemplary view for explaining an example of a video that appears during a television shopping program;
FIG. 4 is an exemplary flowchart for explaining a detection method of a television shopping program according to the embodiment of the invention;
FIG. 5 is an exemplary flowchart for explaining a use example of the detected television shopping program; and
FIG. 6 is an exemplary flowchart for explaining another use example of the detected television shopping program.

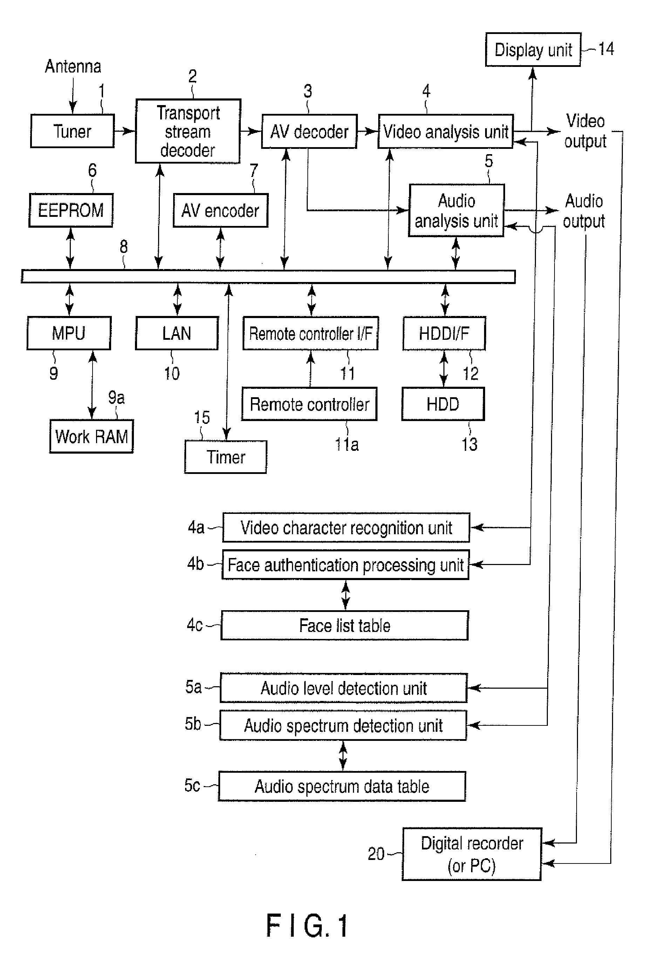

Various embodiments of the invention will be described with reference to the drawings. FIG. 1 is a block diagram for explaining the arrangement of a video apparatus according to an embodiment of the invention. This apparatus arrangement can be embodied as one function of a digital TV receiver, digital video recorder, or AV personal computer.

In the arrangement shown in FIG. 1, tuner 1 receives a digital broadcast signal from, e.g., a UHF antenna or BS antenna, demodulates the received signal, and supplies the demodulated output to transport stream decoder 2. A video signal and audio signal of a program selected by transport stream decoder 2 are input to and decoded by audio video (AV) decoder 3.

The video signal decoded by AV decoder 3 is supplied to video analysis unit 4, and the audio signal is supplied to audio analysis unit 5.

EEPROM 6 is used to save computer programs (firmware), parameters, and the like for implementing apparatus functions. Transport stream decoder 2, AV decoder 3, and EEPROM 6 are connected to main bus 8. To this main bus 8, microcomputer (MPU) 9 which systematically controls the apparatus is connected. To MPU 9, work RAM 9a which provides a work area upon execution of a program is connected. Also, to main bus 8, timer (or system time clock counter) 15 is connected, and can measure time periods of various kinds of information processed by MPU 9.

Furthermore, to the apparatus shown in FIG. 1, external devices can be connected via main bus 8. For this purpose, local area network (LAN) terminal 10, remote controller interface 11, and hard disc interface 12 are connected to main bus 8. In this embodiment, hard disc drive (HDD) 13 can be connected via interface 12. This HDD 13 can record video and audio feature amounts, which are calculated in advance, in addition to broadcast recorded data. To main bus 8, AV encoder 7 is connected, and can convert the video signal decoded by AV decoder 3 into a predetermined format (for example, a DVD format or BD format).

A video output from video analysis unit 4 is supplied to display unit 14, and is displayed on a screen. Also, this video output is supplied to digital recorder (or AV personal computer with a video recording function) 20 outside the apparatus. This digital recorder 20 also receives an audio output from audio analysis unit 5. In order to transfer the video output and audio output to digital recorder 20, an HDMI cable (or a D or S terminal video cable and audio cables) can be used.

To video analysis unit 4, video character recognition unit 4a and face authentication processing unit 4b are connected. To face authentication processing unit 4b, face list table 4c which includes feature point information of faces of specific persons (e.g., sales casters of television shopping programs) prepared in advance is connected.

Video character recognition unit 4a extracts a character portion from an image in a video frame, and determines the character type (numeral, comma, hyphen, period, currency sign, etc.) of each character of that portion. To this character detection and determination, a state-of-the-art technique can be applied (for example, see a telop extraction method disclosed in Jpn. Pat. Appln. KOKAI Publication No. 2007-274154). As another state-of-the-art character detection method, an optical character reading apparatus (OCR) is known. The OCR executes complicated processing for also identifying many kinds of Kanji characters. However, in the embodiment of the invention, since a small number of types of characters (numerals, a comma, hyphen, period, alphabets, and symbols and letters which indicate currency such as "¥", "Yen", "$", or "Euro") need only be identified, the processing can be simplified, and the processing time can also be shortened.

Face authentication processing unit 4b can have the following configuration, although not shown. That is, face authentication processing unit 4b applies edge emphasis processing to image data in each video frame sent from video analysis unit 4 by changing a tone or contrast of the image data as needed, so as to emphasize the edges (that of a face, those of eyes, nose, and mouth, etc.) of a face image included in that frame, thus allowing easy detection of a face pattern including the eyes, nose, mouth, and the like.

Then, face authentication processing unit 4b specifies two-dimensional area FA including the face image using, e.g., two-dimensional coordinate values having an upper left corner of a rectangular area including the face image as an origin. Face authentication processing unit 4b calculates correlations between the face pattern on area FA and a standard face pattern prepared in advance by moving a face detection template (one or more standard face patterns prepared in advance) on two-dimensional area FA of the face image. In this way, face authentication processing unit 4b converts correlation values between feature points (eyes, nose, mouth, etc.) of the face pattern located at specific positions (x, y) expressed by two-dimensional coordinates and the standard pattern into codes. Face list table 4c describes those results.

Let gs(i, j) be a plurality of standard face patterns which are prepared in advance and have different sizes, and Ms(x, y) be a correlation between each standard face pattern gs(i, j) and a local area (an area of an eye, nose, mouth, or the like) in image f(x, y) in two-dimensional area FA. In this case, correlation Ms(x, y) in the local area can be calculated, for example, by:

$$\mathrm{Ms}(x, y) = \Sigma f(x+1, y+1) \cdot gs(i, j)$$
$$/\{\Sigma f(x+1, y+1) \cdot \Sigma gs(i, j)\} \quad \cdots (1)$$

Note that standard face patterns gs(i, j) having different sizes can be prepared by averaging face patterns which are collected to have predetermined sizes.

As the aforementioned method of calculating correlation Ms, a state-of-the-art method can be adopted. For example, "certificate medium issuance apparatus and person verification apparatus" disclosed in Jpn. Pat. Appln. KOKAI Publication No. 2003-108935 will be cited for reference (paragraphs 0043 to 0057 of this publication describe a practical example usable in face authentication/verification processing).

Alternatively, as a calculation method of feature amounts of a face, for example, a method described in known reference (Fukui and Yamaguchi, "Facial Feature Point Extraction Method Based on Combination of Shape Extraction and Pattern Matching", the transactions of the IEICE, (D), vol. J80-D-H, No. 8, pp. 2170 - 2177, 1997) can also be used. When the method of this reference is used, a shape having a given size is extracted from face area information with reference to feature points of a face, and its density information is used as a feature amount.

The aforementioned face feature data are collected in advance in association with faces of well-known sales casters in television shopping programs (for several persons for respective broadcast channels), and are stored in face list table 4c. Then, data stored in face list table 4c are searched for face data that matches features of a face included in an actual video input. If face data hits, it is determined (or confirmed) that the actual video input is that from a certain television shopping program.

On the other hand, to audio analysis unit 5, audio level detection unit 5a and audio spectrum detection unit 5b are connected. To audio spectrum detection unit 5b, audio spectrum data table 5c, which includes spectrum pattern data of voices of specific persons (sales casters of television shopping programs) prepared in advance, is connected. Audio spectrum data table 5c also stores spectrum pattern data of chime sounds (alarm sounds such as "jingle-jangle", "doh-ti, doh-ti, doh", etc.), which are output upon appealing a bargain item price to viewers, those of theme music pieces of television shopping program hosts, and the like.

When an audio level abruptly changes between an audio of a certain video frame and that of the next video frame (e.g., when a sound output so far is suddenly reduced to a silence level), audio level detection unit 5a detects that change. Detection of such audio level change can use a state-of-the-art technique (for example, see a silence detection method disclosed in Jpn. Pat. Appln. KOKAI Publication No. 2006-324743).

Audio spectrum detection unit 5b can have the following configuration, although not shown. That is, audio spectrum detection unit 5b extracts an audio input frequency level distribution in a human audible frequency range from 20 Hz to 20 kHz (simply, a frequency range from about 100 Hz to 4 kHz that roughly covers a fundamental wave component and its harmonic components of a human voice) using a band-pass filter of a 1/3 octave band (simply, a 1/2 octave band or 1 octave band). Then, audio spectrum detection unit 5b stores peak levels of audio inputs in respective bands detected within a predetermined period of time (for example, about 5 to 10 seconds) in a memory. The data stored in this way have different characteristic frequency spectrum patterns depending on audio input sources (human voice, chime sound, theme music, etc.).

Data of such frequency spectrum patterns are collected in advance in association with sound sources unique to television shopping programs (voices of specific sales casters, alarm sounds used in television shopping programs, theme music pieces of television shopping program hosts, etc.), and are stored in audio spectrum data table 5c. Then, data stored in audio spectrum data table 5c are searched for data that matches a frequency spectrum pattern detected from an actual audio input. If data hits, it is determined (or confirmed) that the actual audio input is that from a certain television shopping program.

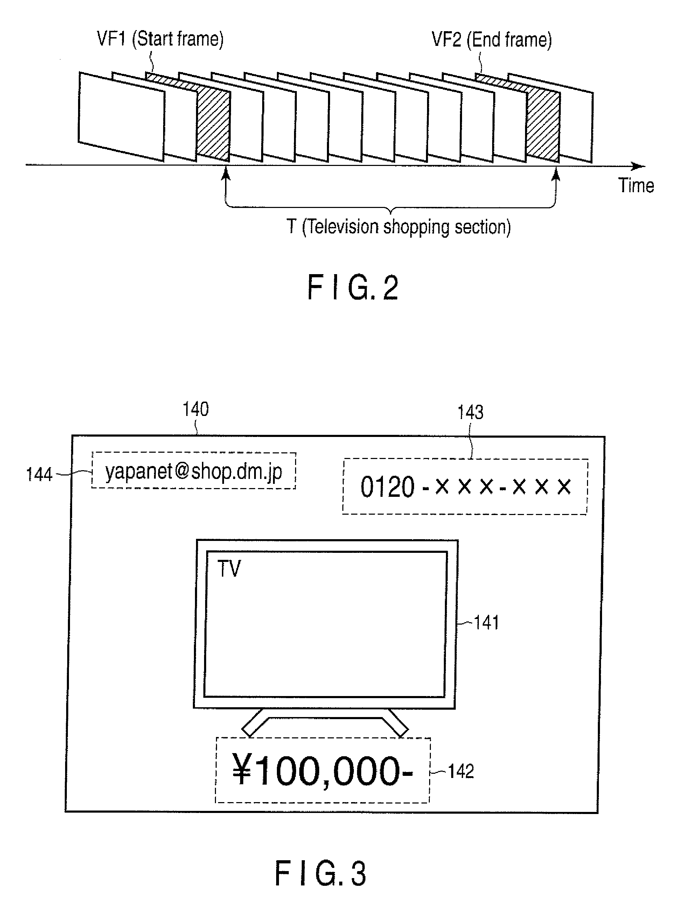

FIG. 2 is a view for explaining start position (start time) VF1 and end position (end time) VF2 of a section sandwiched between two video frames including predetermined features. FIG. 2 illustrates video frames which are time-serially arranged to form a video. Frames VF1 and VF2 are those which have video and audio features, and T represents a section which has frame VF1 as a start frame and frame VF2 as an end frame (a section including a television shopping program). In FIG. 2, only two frames are those including features. However, in practice, more frames often include predetermined features (scene changes, and the like), and a plurality of frames can be handled together as a frame group.

A video feature in frames VF1 and VF2 may be a scene change as a large change of contents from a previous frame or may be a single-color frame, which includes a single color (e.g., black on the entire frame). An audio feature may be a silent frame (or weakest sound frame) in which the strength of a sound included in each frame becomes equal to or smaller than a predetermined value. A frame in which video and audio features appear simultaneously may be a feature frame or that in which one of these features appears may be a feature frame.

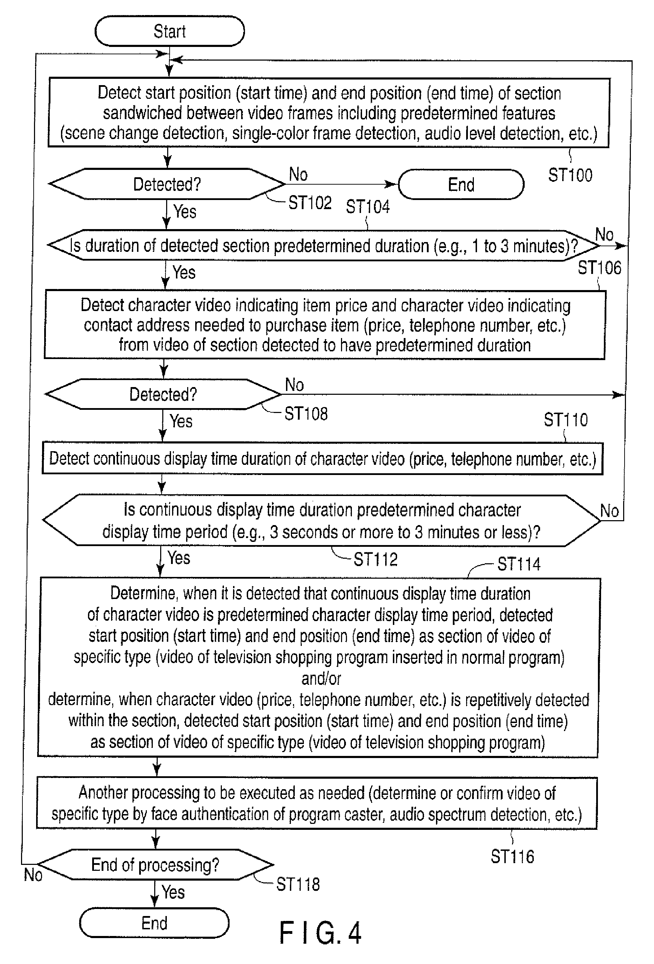

A time interval between the feature frames is represented by "T" in FIG. 2. When T has a predetermined duration (1 minute, 2 minutes, or 3 minutes), a television shopping program is detected from a section sandwiched between the feature frames (frames VF1 and VF2) (details will be described later with reference to FIG. 4).

<Difference between Television Shopping Program and CM>

"Television shopping program" to be detected is to be equivalently handled as a CM for television viewers, but its feature is largely different from a normal CM. That is, a unit CM duration is normally 15 seconds or 30 seconds, or is about 60 seconds at a maximum. However, a duration of a television shopping program is 1 minute at a minimum and is normally 2 to 3 minutes. More specifically, a television shopping program in so-called a spot format, in which a commercial item is introduced within a window of about 1 to 3 minutes during broadcasting of a certain program, is actually broadcast.

Also, a CM having the same contents is often successively and repetitively broadcast, but a television shopping program having the same contents is rarely successively and repetitively broadcast. The advertising effect of a CM is not raised unless it is repetitively broadcast, but a television shopping program for each individual commercial item can attain some positive results even by an isolated broadcast, and if a target item is sold out, it is nonsense to repetitively broadcast the television shopping program.

Furthermore, a CM is provided as a manufacturer of a commercial item to be advertised aims at total sales promotion and sales growth, and each individual dealer rarely presents an actual price and method of selling a commercial item during a CM. On the other hand, a television shopping program is broadcast by aiming at prompt sales gains by presenting a seller and a price and method of selling each individual item to viewers on favorable terms, and it is important for viewers to know the price and method of purchasing that item. For this reason, a normal CM does not include any information about a price and purchase application address, but a television shopping program indispensably includes information about a price and purchase application address (telephone number, etc.). A CM and television shopping program can be discriminated from each other based on these contents and a longer broadcast duration of the television shopping program than the CM.

If there is a 60-sec CM including presentations of a price and purchase application address, that CM may be erroneously recognized as a television shopping program by the aforementioned method. However, a ratio (%) of occurrence of such recognition errors is low when viewed from various CM broadcasts. Such possibility can be effectively reduced by the following method. In a television shopping program, a unique identical sales person (sales caster: the number of such sales casters is different depending on broadcast channels, and is not so large) normally introduces various items. Hence, information of a face and/or voice of that sales person is registered in advance, and the face and/or voice of the sales person is identified based on registered information, thus confirming a television shopping program.

When a plurality of CMs are successively broadcast within a certain broadcast time window, that broadcast time window often amounts to several minutes. Even in this case, the duration of each individual CM in that time window is 15 or 30 seconds, or 60 seconds at a maximum. Also, a plurality of CMs and a television shopping program are often broadcast together within a certain broadcast window. In this case, the duration of each individual CM in that time window is 60 seconds or less, but that of the television shopping program is one minute or longer.

FIG. 3 is a view for explaining an example of a video that appears during a television shopping program. In this example, price presentation 142 of an actual sales price (not a catalog price but a discount price unique to that television shopping program), and telephone number 143 and mail address 144 indicating a purchase contact address are displayed on display screen 140 of display unit 14 in addition to image 141 of a target item (digital TV). These images 141 to 144 are continuously displayed on screen 140 for a certain period of time or longer (several seconds or longer). Especially, telephone number 143 and the like indicating the contact address are normally kept displayed from the beginning to the end of the television shopping program. When this telephone number 143 (normally a toll free number starting from "0120" in Japan) is kept displayed, and price presentation 142 is displayed for a certain time period or longer (at least several seconds or longer) that allows viewers to recognize the price, it is nearly all right to determine the television shopping program based only on them. Note that the price presentation starts from "¥" as a currency sign or ends with "Yen" as currency letters in Japan.

The telephone number and price can be discriminated from each other as follows. That is, when a detected character string includes numerals and hyphen (or period) symbols, it is interpreted as a telephone number (in Japan, when a character string including numerals and a hyphen starting from "0120-" is detected, it is especially interpreted as a telephone number; upon carrying out this embodiment in, e.g., Europe other than Japan, a method of interpreting a character string as a telephone number when numerals are delimited by periods like 0000.111.222 is also available). On the other hand, when a detected character string includes numerals, commas, and a currency sign (for example, ¥100,000-, 100,000 Yen, 1 hundred thousand Yen, etc.), it can be interpreted as a price. A display time duration of a telephone number is appropriately defined as a parameter, and when a character string that can be assumed as a telephone number is displayed on the screen for the time duration of that parameter or more, it can be determined that the telephone number is displayed. The same applies to a price.

In an embodiment to be described below, a video section longer than a CM (1 minute to 3 minutes) is detected, and character videos of an item price and purchase contact address are detected from a video of that section. Then, when the detected character videos (the price, telephone number, etc.) are continuously displayed for several seconds or longer, that section is determined as a video section of a television shopping program. In order to discriminate from a CM more reliably, a face and voice of a program caster who appears in a video of that section, or an effect sound or theme music are detected as needed. If the program caster, or the effect sound or theme music is familiar in a television shopping program, that section can be confirmed as the television shopping program.

FIG. 4 is a flowchart for explaining the detection method of a television shopping program according to the embodiment of the invention. A start position (start time) and end position (end time) of a section sandwiched between video frames (frames VF1 and VF2 in FIG. 2) including predetermined features (scene changes, single-color frames, abrupt change in audio level, etc.) are detected (ST100). If such frames cannot be detected (NO in ST102), it is determined that no television shopping program is detected, and the processing ends.

If video frames including predetermined features can be detected (YES in ST102), a duration of a section between the two detected frames is checked. If that duration of the section does not fall within a predetermined duration range (for example, from 1 minute (inclusive) to 3 minutes (inclusive)) (NO in ST104), it is determined that the section does not include any television shopping program but includes a CM or a part of a normal program, and the process returns to the feature frame detection processing (ST100).

If the duration of that section falls within the predetermined duration range (1 minute to 3 minutes) (YES in ST104), that section is likely to include a television shopping program. In this case, a character video indicating an item price and that indicating a contact address used to purchase that item (a price, telephone number, etc.) are detected from a video of the detected predetermined section (ST106). If such character videos cannot be detected (NO in ST108), it is determined that the section does not include any television shopping program, and the process returns to the feature frame detection processing (ST100).

If the character videos (a price, telephone number, etc.) can be detected (YES in ST108), a continuous display time duration of that character video is detected (ST110). If the continuous display time duration does not fall within a predetermined character display time range (for example, from 3 seconds (inclusive) to 3 minutes (inclusive)) (NO in ST112), it is determined that the section does not include any television shopping program, and the process returns to the feature frame detection processing (ST100). (When a price and contact telephone number are instantaneously displayed and disappear soon, viewers are unlikely to apply to purchase an item, and it is nonsense to broadcast a television shopping program.)

If it is detected that the continuous display time duration of the character video falls within the predetermined character display time range (YES in ST112), it is determined that the detected start position (start time) and end position (end time) of the section define a section of a video of a specific type (a video of a television shopping program inserted in a normal program) (former half in ST114). And/or if the character videos (a price, telephone number, etc.) are repetitively detected in this section, it is determined that the detected start position (start time) and end position (end time) of the section define a section of the video of the specific type (the video of the television shopping program) (latter half in ST114).

As a result of the above determination, a broadcast window (from the start position to the end position of that section) of a television shopping program can be detected. However, depending on the contents of a program to be broadcast, a television shopping program is not always detected reliably at 100%. In order to obtain a more definitive determination result of a television shopping program or to confirm that the determination result is correct, the following processing is executed as needed. That is, it is determined or confirmed based on face authentication of a program caster (sales caster) and audio spectrum detection that the section is a television shopping program (a video of the specific type) (ST116).

The aforementioned processes (a processing loop including ST100 to ST118) can be continuously executed during viewing of a certain broadcast channel or during video recording or playback of a certain broadcast recorded title. Upon completion of viewing of a certain broadcast channel or video recording or playback of a certain broadcast recorded title, the processing shown in FIG. 4 ends (YES in ST118). Information of the start position and end position of the television shopping program collected until this processing ends can be stored in work RAM 9a, EEPROM 6, and/or HDD 13 in FIG. 1.

That is, when a television shopping program is detected from a certain broadcast recorded title, the information of the start position and end position of the detected television shopping program can be recorded in, e.g., HDD 13 as a part of management information of the recorded title. For example, when the broadcast video recording is made based on the DVD video recording standard (DVD-VR standard), entry points are set at the beginning (corresponding to the playback time start position of frame VF1 in FIG. 2) and the end (corresponding to the playback time start position of frame VF2 in FIG. 2) of the section of the detected television shopping program, and a section sandwiched between these two entry points can be defined as a chapter of the television shopping program.

These entry points are included as a part (cell entry point information) in management information (video manager) of a title recorded based on the DVD-VR standard, and are recorded in HDD 13 or an optical disc (not shown) together with object information (MPEG program stream) of that title. At the time of playback of that object information, the position of the chapter of the television shopping program can be detected from the management information. For this reason, the chapter of the television shopping program is extracted from the recorded title by playlist edit processing to create a title without the television shopping program or a title of only the television shopping program.

As described above, when a television shopping program is detected at the time of broadcast recording, and entry points are set at the beginning and the end of that program, the following operations are allowed.

When a viewer (apparatus user) detects the start of a television shopping program, the user can intentionally skip a television shopping program part, and can start playback from the end timing of the television shopping program.

When program playback progresses until the start timing of a television shopping program at the time of playback of a recorded title, that program is automatically skipped based on the entry points at the start and end positions of the television shopping program, and playback of the sequel of the recorded title can be started from the end timing of the television shopping program. Alternatively, the television shopping program can be automatically deleted from the recorded title based on the entry points at the start and end position of the television shopping program (that is, a television shopping program part is automatically deleted from the recorded title, and is never played back subsequently).

The points of the processing shown in FIG. 4 can be sorted out as follows.

a. When it is detected that a telephone number is displayed during a section sandwiched between frames including features, that section is determined as that of a television shopping program.

b. When it is detected that a price is displayed during a section sandwiched between frames including features, that section is determined as that of a television shopping program.

c. In order to attract the attention of viewers at the time of display of a price, a treble effect sound (chime sound like "jingle-jangle" or "ding-dong") is often played back together. When an audio is analyzed to detect a sound including many treble components (especially, when it is detected that such sound is played back simultaneously with display of a price), it is determined that a price is displayed in a section sandwiched between frames including features, and that that section is that of a television shopping program.

d. A theme sound of a host of a television shopping program is often played back at the beginning of the program. When the feature of an analyzed sound matches that of a theme sound stored in advance, it is determined that a section sandwiched between frames including features is that of a television shopping program.

e. In a television shopping program, identical contents are often repetitively broadcast within that program so as to enhance the advertising effect. Only words of the same contents may be repeated or an identical video and audio may be repeated. When it is detected that a specific audio and video are repetitively played back during a section sandwiched between frames including features, it is determined that the section is that of a television shopping program.

f. The feature amounts of a face of a caster who introduces an item in a television shopping program are stored in advance, and are collated with those calculated from a face of a person who appears in a video to be analyzed. When the feature amounts of a face detected in a section sandwiched between frames including features match those of the face of the caster, it is determined that the section is that of a television shopping program.

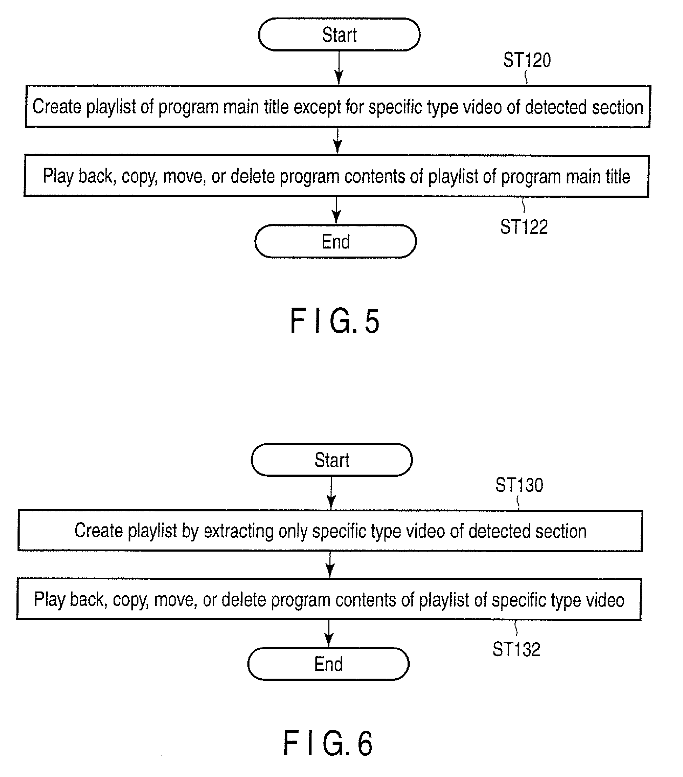

FIG. 5 is a flowchart for explaining a use example of the detected television shopping program. In this example, a playlist of a program main title except for a video of a specific type (television shopping program) in the detected section is created (ST120), and the program contents of the playlist of the program main title are played back, copied, moved, or deleted (ST122). Using this processing, a program main title excluding a television shopping program, which cannot be predicted from, e.g., an EPG, can be created. Alternatively, a title excluding a program main title can also be created.

FIG. 6 is a flowchart for explaining another use example of the detected television shopping program. In this example, a playlist obtained by extracting only a video of a specific type (television shopping program) in the detected section is created (ST130), and the program contents of the playlist of the video of the specific type are played back, copied, moved, or deleted (ST132). Using this processing, only television shopping programs are extracted and collected from many recorded titles to form a single television shopping program title, and that title can be played back later. Alternatively, a program main title except for a television shopping program can be created.

<Summary of Embodiment>

1. As for a section sandwiched between two frames including a predetermined video feature and/or audio feature of those which form a video,
when the duration of the section satisfies a condition defined in advance (a duration between two frames including, e.g., scene changes and/or audio interruptions falls within a range from 1 minute to 3 minutes), and
when a specific character string is continuously displayed on the video for a predetermined period of time or longer, that section is determined as a video of a specific type (television shopping).

2. The predetermined video feature includes a scene change, i.e., a large change of video contents between the preceding frame and the current frame.

3. The predetermined video feature includes a single color on the entire frame (e.g., black on the entire frame).

4. The predetermined audio feature includes an audio level included in the frame which is smaller than a predetermined threshold.

5. The specific character string includes a telephone number including a sequence of numerals and hyphens (or periods).

6. The specific character string includes a price including a sequence of numerals and commas.

7. The video of the specific type includes a video of a television shopping program.

8. As for a section sandwiched between two frames including a predetermined video feature and/or audio feature of those which form a video,
when the duration of the section satisfies a condition defined in advance (a duration between two frames including, e.g., scene changes and/or audio interruptions falls within a range from 1 minute to 3 minutes), and
when an audio having a specific feature is included,

that section is determined as a video of a specific type (television shopping).

9. The predetermined video feature includes a scene change.

10. The predetermined video feature includes a single color on the entire frame.

11. The predetermined audio feature includes an audio level included in the frame which is smaller than a predetermined threshold.

12. The audio having the specific feature includes an effect sound including many treble components.

13. The audio having the specific feature includes a theme sound (music) of a television shopping host.

14. The video of the specific type includes a video of a television shopping program.

15. As for a section sandwiched between two frames including a predetermined video feature and/or audio feature of those which form a video,

when the duration of the section satisfies a condition defined in advance (a duration between two frames including, e.g., scene changes and/or audio interruptions falls within a range from 1 minute to 3 minutes), and

when a specific video and/or audio repetitively appear/appears,

that section is determined as a video of a specific type (television shopping).

16. The predetermined video feature includes a scene change.

17. The predetermined video feature includes a single color on the entire frame.

18. The predetermined audio feature includes an audio level included in the frame which is smaller than a predetermined threshold.

19. The video of the specific type includes a video of a television shopping program.

20. As for a section sandwiched between two frames including a predetermined video feature and/or audio feature of those which form a video,

when the duration of the section satisfies a condition defined in advance (a duration between two frames including, e.g., scene changes and/or audio interruptions falls within a range from 1 minute to 3 minutes), and

when the feature amounts of a face extracted from the video are included in a face list defined in advance,

that section is determined as a video of a specific type (television shopping).

21. The predetermined video feature includes a scene change.

22. The predetermined video feature includes a single color on the entire frame.

23. The predetermined audio feature includes an audio level included in the frame which is smaller than a predetermined threshold.

24. The video of the specific type includes a video of a television shopping program.

<Effect of Embodiment>

The start position (start time) and end position (end time) of a television shopping program, which cannot be detected by a conventional method, can be detected.

When a television shopping program is to be detected by a conventional CM detection technique, a program main title is more likely to be erroneously detected as a television shopping program. However, by detecting features unique to the television shopping program (continuous display of character videos such as a price and telephone number within a program window of several minutes, appearance of a unique sales caster, or use of a unique chime sound or unique theme music), possibility of a detection error of a program main title as a television shopping program can be reduced.

A television shopping program inserted at an arbitrary position before or after or in the middle of a broadcast program main title can be detected to be discriminated from commercial messages (CMs). For this reason, when a certain program is recorded by program recording, and the recorded program includes unwanted CMs and a television shopping program, a video excluding the television shopping program can be extracted (as for CMs, frame sections including scene changes and instantaneous sound interruptions are detected in, e.g., ST100 in FIG. 4, and sections which have a duration of 15 seconds, 30 seconds, or 60 seconds and do not include any character video to be detected in ST106 are detected from the detected sections, thus detecting CMs with a high probability in addition to a television shopping program. The CMs detected in this way can be removed together with the television shopping program). Conversely, only the television shopping program can be extracted by removing the program main title and CMs.

Since information unique to a television shopping program (item price characters and contact address characters which are continuously displayed for a predetermined period of time, a face and voice of an item sales person, a theme sound of a television shopping host, a specific chime sound upon appealing an item, etc.) can be used in detection, high-precision detection of a television shopping program, which cannot be attained by the conventional CM detection method, can be attained.

Note that a program to be broadcast to have a long-term program window for the purpose of television shopping from the beginning (for example, a shop channel program having a duration of about 30 minutes) can be detected as a television shopping program from information of an electronic program guide (EPG) without using this invention. However, a television shopping program, which is inserted without notice to have a section longer than a CM in a normal program (drama or animation) that does not aim at television shopping, cannot be detected from an EPG. By carrying out the invention, such television shopping program can be detected with a high probability to be discriminated from CMs.

<Correspondence Example between Embodiment and Invention>

1. A video apparatus according to an embodiment of the invention includes a section detection module, a section duration detection module, a character video detection module, a character video display time detection module, and a specific type video determination module.
The section detection module (MPU 9; ST100) detects a start position (start time) and end position (end time) of a section (a television shopping program or another) sandwiched between two video frames (VF1 and VF2) including a predetermined video feature and/or audio feature (scene change, audio level, etc.).
The section duration detection module (MPU 9; ST104) detects whether or not a duration of the section (a television shopping program or another), the start position (start time) and end position (end time) of which are detected, is a predetermined duration (for example, 1 minute, 2 minutes, or 3 minutes) (if the duration is, for example, less than 1 minute, that section is assumed as a CM in place of television shopping; if the duration is, for example, 3 minutes or longer, that section is assumed as a part of a normal program in place of television shopping).
When it is detected that the duration of the section is the predetermined duration (1 to 3 minutes) (when a program which is more likely to be a television shopping program is detected), the character video detection module (MPU 9, 4a; ST106) detects a character video (for example, ¥100,000-) indicating a price of a commercial item (for example, a digital TV) and/or a character video (telephone number, FAX number, mail address, etc.) indicating a contact address used to purchase that item from the video of this section.
The character video display time detection module (MPU 9; ST110) detects a continuous display time duration of the character video (price, telephone number, etc.).
When it is detected that the continuous display time duration of the character video is a predetermined character display time period (for example, equal to or longer than 3 to 5 seconds, and within the duration of the section) (here, if a price and telephone number are continuously displayed for several seconds or longer within a program section of several minutes, that section should be assumed to be a television shopping program), the specific type video determination module (MPU 9; ST114) determines that the start position (start time) and end position (end time) detected by the section detection module define a section of a video of a specific type (a video of a television shopping program inserted in a normal program).
2. The character video includes a video (for example, ¥100,000-, 100,000 Yen, or 1 hundred thousand Yen) which includes a currency sign (e.g., ¥), numerals, and commas, and indicates a price of a commercial item (e.g., a digital TV), and/or a video (telephone number, FAX number, mail address, etc.) which includes numerals and hyphens, or numerals and periods or alphabets and a special symbol (e.g., @) and indicates a contact address used to purchase the item (e.g., a digital TV). Such price video and contact address video are not included in a normal CM, and are information unique to a television shopping program.

**Claims**

1. A video apparatus comprising:

a section detection module (MPU9 for ST100) configured to detect a start position and an end position of a section sandwiched between two video frames including a predetermined video feature and/or audio feature;
a section duration detection module (MPU9, 9a for ST104) configured to detect whether or not a duration of the section, the start position and the end position of which are detected, is a predetermined duration;
a character video detection module (MPU9, 4a for ST106) configured to detect, when the duration of the section is the predetermined duration, a character video which indicates a price of a commercial item and/or a character video which indicates a contact address used to purchase the commercial item from a video of the section;
a character video display time detection module (MPU9, 9a for ST110) configured to detect a continuous display time duration of the character video; and
a specific type video determination module (MPU9 for the former half of ST114) configured to determine, when the continuous display time duration of the character video is a predetermined character display time period, the start position and the end position detected by the section detection module as a section of a video of a specific type.

2. The apparatus of claim 1, wherein the character video includes a video which includes a currency sign and numerals and indicates a price of a commercial item and/or a video which includes numerals and hyphens, or numerals and periods or alphabets, and indicates a contact address used to purchase the commercial item.

3. The apparatus of claim 1, wherein when the character video detection module repetitively detects the character video in the section, the specific type video determination module determines the start position and the end position detected by the section detection module as the section of the video of the specific type.

4. The apparatus of claim 1, further comprising:

   a face authentication module (4b, 4c) configured to detect a face of a specific person, wherein
   when the face of the specific person is detected from the video of the section, the specific type video determination module is configured to determine or confirm that this section is the section of the video of the specific type.

5. The apparatus of claim 1, wherein the predetermined video feature includes a discontinuous change of video contents between successive video frames.

6. The apparatus of claim 1, wherein the predetermined video feature includes a single color on the entire video frame.

7. The apparatus of claim 1, wherein the predetermined audio feature includes an audio level corresponding to the video frame, which is smaller than a predetermined level.

8. The apparatus of claim 1, further comprising:

   a spectrum detection module (5b, 5c) configured to detect a spectrum of a sound within an audible frequency range, wherein
   when a predetermined spectrum pattern is detected from an audio corresponding to the video frames, the specific type video determination module is configured to determine or confirm that the section of the predetermined spectrum pattern is the section of the video of the specific type.

9. A specific type video detection method comprising:

   detecting (ST100) a start position and an end position of a section sandwiched between two video frames including a predetermined video feature and/or audio feature;
   detecting (ST104) whether or not a duration of the section, the start position and the end position of which are detected, is a predetermined duration;
   detecting (ST106), when the duration of the section is the predetermined duration, a character video which indicates a price of a commercial item and/or a character video which indicates a contact address used to purchase the commercial item from a video of the section;
   detecting (ST110) a continuous display time duration of the character video; and
   determining (former half of ST114), when the continuous display time duration of the character video is a predetermined character display time period, the start position and the end position detected by the section detection module as a section of a video of a specific type.

10. The method of claim 9, wherein when the character video is repetitively detected within the section, the detected start position and the end position are determined as the section of the video of the specific type (later half of STl14).

F I G. 1

VF1 (Start frame)  VF2 (End frame)

Time

T (Television shopping section)

# FIG.2

140  143

144 — yapanet@shop.dm.jp   0120-×××-×××

TV

—141

¥100,000-   —142

# FIG.3

Start

Detect start position (start time) and end position (end time) of section
sandwiched between video frames including predetermined features
(scene change detection, single-color frame detection, audio level detection, etc.)

ST100

Detected? — No → End

Yes — ST102 ST104

Is duration of detected section predetermined duration (e.g., 1 to 3 minutes)? — No

ST106

Yes

Detect character video indicating item price and character video indicating
contact address needed to purchase item (price, telephone number, etc.)
from video of section detected to have predetermined duration

Detected? — No

Yes — ST108

ST110

Detect continuous display time duration of character video (price, telephone number, etc.)

Is continuous display time duration predetermined character
display time period (e.g., 3 seconds or more to 3 minutes or less)? — No

Yes — ST112

ST114

Determine, when it is detected that continuous display time duration
of character video is predetermined character display time period, detected
start position (start time) and end position (end time) as section of video of
specific type (video of television shopping program inserted in normal program)
and/or
determine, when character video (price, telephone number, etc.) is repetitively detected
within the section, detected start position (start time) and end position (end time)
as section of video of specific type (video of television shopping program)

Another processing to be executed as needed (determine or confirm video of
specific type by face authentication of program caster, audio spectrum detection, etc.)

ST116

End of processing? — No

Yes — ST118

End

F I G. 4

EP 2 257 041 A1

```
        ┌──────────────┐
        │    Start     │
        └──────────────┘
               │                    ST120
               ▼
┌─────────────────────────────────────────────────────────────────┐
│ Create playlist of program main title except for specific type video of detected section │
└─────────────────────────────────────────────────────────────────┘
               │
               ▼
┌─────────────────────────────────────────────────────────────────┐
│ Play back, copy, move, or delete program contents of playlist of program main title │
└─────────────────────────────────────────────────────────────────┘
               │                    ST122
               ▼
        ┌──────────────┐
        │     End      │
        └──────────────┘
```

# FIG. 5

```
        ┌──────────────┐
        │    Start     │
        └──────────────┘
               │                    ST130
               ▼
┌─────────────────────────────────────────────────────────────────┐
│ Create playlist by extracting only specific type video of detected section │
└─────────────────────────────────────────────────────────────────┘
               │
               ▼
┌─────────────────────────────────────────────────────────────────┐
│ Play back, copy, move, or delete program contents of playlist of specific type video │
└─────────────────────────────────────────────────────────────────┘
               │                    ST132
               ▼
        ┌──────────────┐
        │     End      │
        └──────────────┘
```

# FIG. 6

14

Europäisches
Patentamt

European
Patent Office

Office européen
des brevets

# EUROPEAN SEARCH REPORT

Application Number

EP 09 17 4315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 845 477 A2 (TOSHIBA KK [JP]) 17 October 2007 (2007-10-17) | 1,9 | INV. H04N5/14 H04N5/445 |
| Y | * the whole document * ----- | 2-8,10 | G06F17/30 G06K9/00 |
| Y | US 2006/050183 A1 (OHNO TOMOYUKI [JP] ET AL) 9 March 2006 (2006-03-09) * the whole document * ----- | 2-8,10 | |

TECHNICAL FIELDS
SEARCHED     (IPC)

H04N
G06F
G06K

The present search report has been drawn up for all claims

| Place of search | Date of completion of the search | Examiner |
|---|---|---|
| Munich | 18 August 2010 | Brandenburg, Jörg |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.................................................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 09 17 4315

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2010

| Patent document cited in search report | | Publication date | Patent family member(s) | | Publication date |
|---|---|---|---|---|---|
| EP 1845477 | A2 | 17-10-2007 | CN<br>JP<br>JP<br>US | 101047795 A<br>4377887 B2<br>2007274154 A<br>2007230781 A1 | 03-10-2007<br>02-12-2009<br>18-10-2007<br>04-10-2007 |
| US 2006050183 | A1 | 09-03-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004336507 A
- JP 2007274154 A
- JP 2003108935 A
- JP 2006324743 A

**Non-patent literature cited in the description**

- **Fukui ; Yamaguchi.** *Facial Feature Point Extraction Method Based on Combination of Shape Extraction and Pattern Matching,* 1997, vol. J80-D-H (8), 2170-2177